# EUROPEAN PATENT APPLICATION

(11) **EP 4 478 078 A1**
(43) Date of publication of application: **18.12.2024**
(21) Application number: 23305949.2
(22) Date of filing: 14.06.2023
(51) Int. Cl.: G01S 7/282, G01S 13/40, G01S 7/40, G01S 13/34

(54) **RADAR TRANSMITTER PHASE STEP AND PHASE DIFFERENCE CHECK**

(71) Applicant: NXP B.V., 5656 AG Eindhoven (NL)
(72) Inventor: Hajji, Zahran, 31023 Toulouse Cedex 1 (FR); Rifai, Ayoub, 31023 Toulouse Cedex 1 (FR); Mesnard, Thierry, 31023 Toulouse Cedex 1 (FR); Cilici, Florent Jérémy Alexis, 31023 Toulouse Cedex 1 (FR)
(74) Representative: Schmütz, Christian Klaus Johannes

(57) **Abstract**

A method includes techniques for identifying the phase step of one transmitter while conducting phase difference measurements between two transmitters in a multi-transmitter radar device. The method includes setting a first phase of a first transmitter in the multi-transmitter device to a fixed phase value and setting a second phase of a second transmitter in the multi-transmitter device to an initial phase value, varying the second phase of the second transmitter from the initial phase value to a final phase value and performing a sample measurement at each variation to obtain a plurality of intermediate frequency (IF) samples; and transforming the plurality of IF samples into complex samples. The method then includes determining one or more phase steps of the second transmitter based on the complex samples.

## Description

### BACKGROUND

Radar is used to detect objects and provide information about the detected objects for use in a wide variety of applications. For example, vehicles can employ radar systems to enable driver assistance features and autonomous driving capabilities. In order to detect nearby objects quickly and accurately, next generation radar systems such as Frequency-Modulated Continuous-Wave (FMCW) radar are employed. These radar systems sometimes utilize a transceiver with multiple transmitters to implement radar beam steering techniques. In some cases, these techniques dynamically adapt radar transmission beam patterns by modifying a phase of each of the transmitters in real time without changing the physical configuration of the transmission antennas. In general, the performance and accuracy of beam steering techniques depend on the ability to control a phase shifter to set each transmitter's phase. Deviations from the programmed phase applied at any of the transmitters will likely degrade the performance and accuracy of the radar system. To this end, many radar systems include built-in self-test (BIST) components to monitor and ensure the accuracy and control of its transmitters and corresponding phase shifters.

### SUMMARY

Various example embodiments are directed to radar transmitter BIST techniques.

In a first embodiment, a method includes setting a first phase of a first transmitter in a multi-transmitter device to a fixed phase value and setting a second phase of a second transmitter in the multi-transmitter device to an initial phase value. The method also includes varying the second phase of the second transmitter from the initial phase value to a final phase value and performing a sample measurement at each variation to obtain a plurality of intermediate frequency (IF) samples. The method further includes transforming the plurality of IF samples into complex samples and determining one or more phase steps of the second transmitter based on the complex samples.

In some aspects of the first embodiment, the method includes performing the sample measurement at each variation relative to the first phase. In some aspects of the first embodiment, the performing of the sample measurement relative to the first phase at each variation to obtain the plurality of IF samples includes mixing a signal from the first transmitter with a signal from the second transmitter and performing an analog-to-digital conversion to obtain the plurality of IF samples.

In some aspects of the first embodiment, the method includes determining a phase difference between the first transmitter and the second transmitter based on the complex samples.

In some aspects of the first embodiment, the transforming of the plurality of IF samples into complex samples includes applying a Hilbert transform to the plurality of IF samples. In some aspects of the first embodiment, the determining of the one or more phase steps of the second transmitter includes computing an inverse tangent of a resulting product of the Hilbert transform to identify a phase corresponding to each of the plurality of IF samples. In some aspects of the first embodiment, the determining of the one or more phase steps of the second transmitter includes computing a relative difference between each of the identified phases corresponding to each of the plurality of IF samples. In some aspects of the first embodiment, the relative difference is based on a number of performed sample measurements.

In some aspects of the first embodiment, the varying of the second phase of the second transmitter from the initial phase value to the final phase value includes increasing the phase by a fixed amount between each variation. In some aspects of the first embodiment, the fixed amount is in a range of 1° to about 90°.

In some aspects of the first embodiment, the method is performed during a built-in self-test (BIST) time slot in a radar cycle.

In a second embodiment, a device includes a first transmitter including a first phase rotator and a second transmitter including a second phase rotator. The device also includes a mixer to combine outputs from the first transmitter and the second transmitter. The device also includes a processor to set a first phase of the first transmitter to a fixed phase value and set a second phase of the second transmitter to an initial phase value, vary the second phase of the second transmitter from the initial phase value to a final phase value and perform a sample measurement at each variation to obtain a plurality of intermediate frequency (IF) samples, and transform the plurality of IF samples into complex samples and determine one or more phase steps of the second transmitter based on the complex samples.

In some aspects of the second embodiment, the processor is to perform the sample measurement at each variation relative to the first phase.

In some aspects of the second embodiment, the processor is to determine a phase difference between the first transmitter and the second transmitter based on the complex samples.

In some aspects of the second embodiment, the transforming of the plurality of IF samples into complex samples includes applying a Hilbert transform to the plurality of IF samples. In some aspects of the second embodiment, the determining of the one or more phase steps of the second transmitter includes computing an inverse tangent of a resulting product of the Hilbert transform to identify a phase corresponding to each of the plurality of IF samples.

In some aspects of the second embodiment, wherein determining the one or more phase steps of the second transmitter comprises computing relative difference between each of the identified phases corresponding to each of the plurality of IF samples

In a third embodiment, a built-in-safety test (BIST) circuitry for a multi-transmitter device includes BIST circuitry to set a first phase of a first transmitter in the multi-transmitter device to a fixed phase value and set a second phase of a second transmitter in the multi-transmitter device to an initial phase value, vary the second phase of the second transmitter from the initial phase value to a final phase value in increments and perform a sample measurement at each increment to obtain a plurality of intermediate frequency (IF) samples, and transform the plurality of IF samples into complex samples and determine one or more phase steps of the second transmitter based on the complex samples.

In some aspects of the third embodiment, the BIST circuitry is further configured to determine a phase difference between the first transmitter and the second transmitter based on the complex samples.

In some aspects of the third embodiment, the transforming of the plurality of IF samples into complex samples includes applying a Hilbert transform to the plurality of IF samples, and the determining of the one or more phase steps of the second transmitter includes computing an inverse tangent of a resulting product of the Hilbert transform to identify a phase corresponding to each of the plurality of IF samples.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a diagram depicting transmission components and BIST circuitry in a multi-transmitter radar device and an example depiction of a corresponding radar cycle, in accordance with various embodiments.
FIG. 2 is a diagram depicting the process flow through the BIST circuitry components, in accordance with various embodiments.
FIG. 3 is a graph illustrating an example of the output of a mixer embedded between two transmitters in a multi-transmitter radar device, such as the one illustrated in FIG. 1, in accordance with various embodiments.
FIG. 4 is a method flowchart for identifying phase steps of a transmitter along with the phase difference measurement between two transmitters of a multi-transmitter radar device, in accordance with various embodiments.
FIG. 5 is a method flowchart for identifying phase steps of a transmitter along with the phase difference measurement between two transmitters of a multi-transmitter radar device, in accordance with various embodiments.

### DETAILED DESCRIPTION

In some radar systems, a radar cycle signal sequence (or radar cycle, for short) includes multiple time slots including a radar chirp sequence time slot and a BIST time slot. During the radar chirp sequence time slot, the radar system transmits radar chirp sequences to obtain radar information (e.g., the position and velocity) of nearby objects based on the received reflections of the radar chirp sequences. During the BIST time slot, the radar system's BIST controller performs tests to monitor the radar system components and ensure that these components are operating according to a specified set of criteria, thereby ensuring that the radar system is providing accurate and up-to-date information. For example, the BIST controller executes a set of transmission (TX) tests to see if the phase difference between the radar system's transmitters is within a specified range and if the phase steps taken by each transmitter are accurate (e.g., each phase step matches or is within a range of a specified phase step value). However, during the period of time that the BIST controller executes these TX tests, the transmitters are unable to transmit radar chirp sequences. The period of time that the transmitters are unable to be used to transmit radar chirp sequences is referred to as "blind time" since the radar system is not able to detect objects (i.e., the system is "blind") during this period. In general, it is desirable to reduce the duration of the testing of the transmitters in order to reduce the "blind time." Additionally, longer test times result in an increased consumption of power.

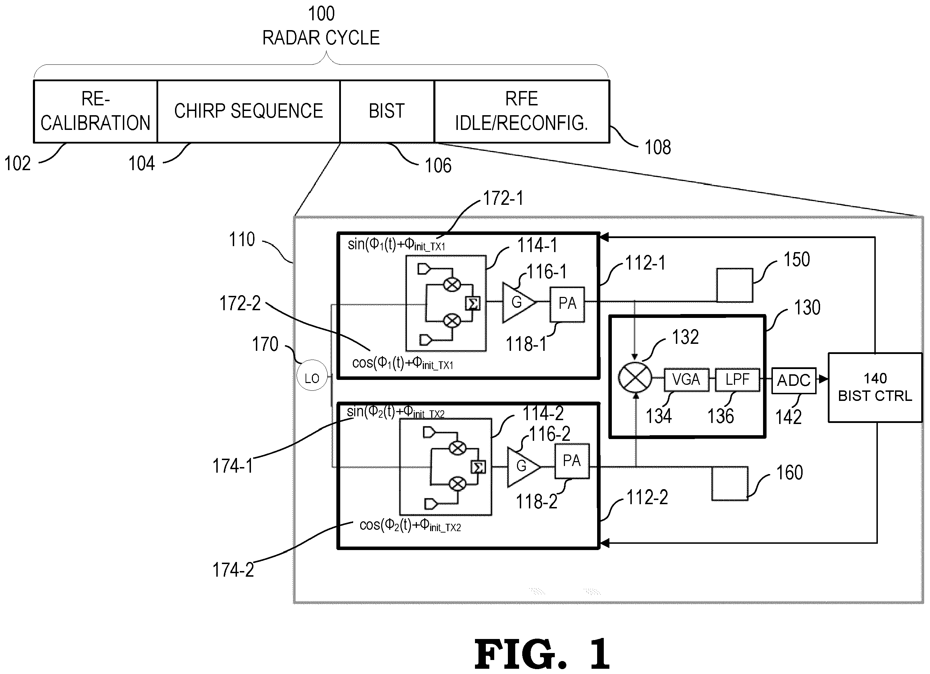

Conventional techniques test the phase difference and the phase steps (that is, execute a TX test) by repeating several sets of phase difference measurements to identify the phase step for each transmitter. Repeating these measurements multiple times leads to longer test times. FIGs. 1-5 describe TX BIST techniques to reduce the time required to test for the phase difference and the phase step of the transmission components in a radar system, which in turn reduces the overall time required for each TX test, and thus increases the performance and efficiency of the radar system. For example, in some cases, the phase difference and phase step testing techniques of the present disclosure provide up to an 85% decrease in the testing duration compared to conventional techniques.

To illustrate, the techniques described herein are directed to a BIST controller that performs phase step and phase difference measurements for multiple transmitters in one set of measurements by leveraging a mixer embedded between the transmitters in a multi-transmitter radar device. In some embodiments, the BIST controller sets a phase of a first transmitter to a fixed phase value and sets a phase of a second transmitter to an initial phase value. The BIST controller incrementally increases the second phase of the second transmitter from the initial phase value to a final phase value and performs a sample measurement at each incremental increase with respect to the fixed phase value of the first transmitter to obtain a plurality of intermediate frequency (IF) samples. In some embodiments, the plurality of IF samples are provided as a discrete sinewave at the mixer output. In some embodiments, the BIST controller applies a Hilbert transform to the IF samples to transform them into complex samples, then identifies the phase of each sample by applying an arctangent (Atan) function. The BIST controller then computes the relative difference between the sample's phases to identify the phase steps for the second transmitter as well as obtaining the phase difference between the two transmitters from a single set of measurements. Accordingly, the phase difference between the two transmitters and the phase steps of the second transmitter are derived from the same set of measurements. This reduces the total time needed to perform the BIST measurements. As a result, the duration of the BIST time slot is reduced, thereby reducing the "blind time" of the radar system. In other words, the techniques of the present disclosure measure the phase difference between two transmitters and the phase step of one of the transmitters from a single set of measurements while conventional techniques only perform the phase difference measurement during the same set of measurements and require additional measurements to obtain the phase step for either one of the two transmitters.

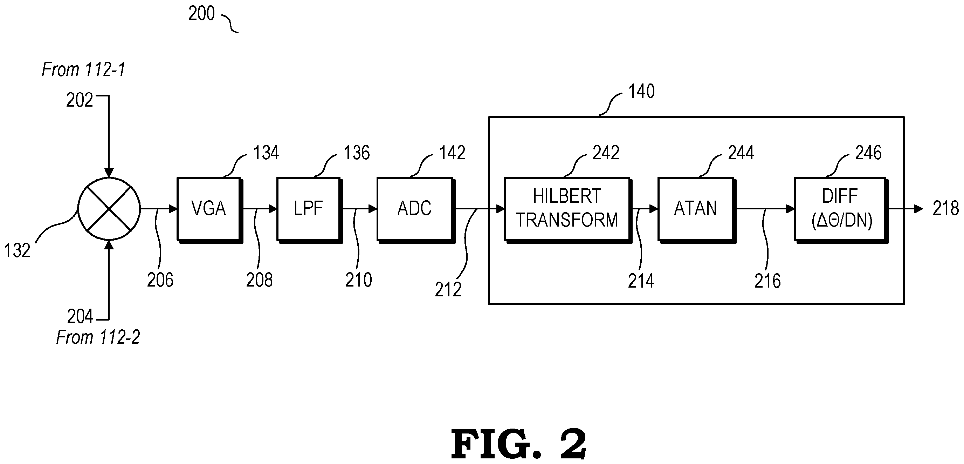

In some embodiments, the BIST controller (such as BIST controller 140 in FIGs. 1 and 2) can be implemented as hardware, software, firmware, or any combination thereof. For example, the BIST controller is, in various implementations, implemented as one of the software executing on a digital processor (e.g., on a digital signal processor (DSP)), hardware that is hard-wired (e.g., as circuitry or a circuit arrangement) to perform the various techniques described herein (e.g., those described in FIGs. 2, 4, and 5), or a combination thereof.

FIG. 1 illustrates transmission components in a multi-transmitter radar device 110 along with an example depiction of a corresponding radar cycle 100 in accordance with some embodiments. The radar cycle 100 includes multiple time slots. In some embodiments, the multi-transmitter radar device 110 (or radar device 110, for short) includes multiple transmitters 112-1, 112-2, a transmission (TX) BIST module 130, an analog-to-digital converter (ADC) 142 and a BIST controller 140. In some embodiments, the TX BIST module 130, ADC 142, and the BIST controller 140 are collectively referred to as "BIST circuitry." The radar device 110 includes components to calibrate the phase shifters 114-1, 114-2 (also known as phase rotators) in the transmitters, perform phase alignments, and check for phase shifter drift to ensure that the phase shifters are performing properly. In some embodiments, the multi-transmitter radar device 100 is implemented in the radar system of a vehicle and is used to support driver assistance or autonomous driving features. The number of transmitters in the multi-transmitter radar device 110 is a matter of design choice and may be scalable to other quantities (e.g., more than two).

The radar cycle 100 includes multiple time slots 102, 104, 106, 108 during which different radar functions are performed. For example, the radar cycle 100 includes a re-calibration time slot 102, a radar chirp sequence time slot 104, a BIST time slot 106, and a radar front-end (RFE) idle/reconfiguration time slot 108. During the re-calibration time slot 102, the radar device 110 is able to recalibrate its radar transmission components (e.g., phase shifters) based on the test results acquired during the previous BIST time slot 106, for example. During the chirp sequence time slot 104, the radar device 110 transmits radar chirp sequences via its one or more transmitters (e.g., such as transmitters 112, 114). The radar device 110 then performs radar measurements based on the received reflections of the transmitted radar chirp sequences. During the BIST time slot 106, the radar device 110 performs tests to ensure that all critical radar system components (e.g., transmitters, receivers, ADCs, etc.) are functional and operating according to a set of pre-determined criteria (e.g., within a set of timing thresholds or phase-related thresholds). For example, during the BIST time slot 106, the radar device 110 checks to see if the phase difference between the phase shifters 114-1, 114-2 in transmitters 112-1, 112-2 is within a defined range and checks to see if the phase step of each of the phase shifters 114-1, 114-2 in transmitters 112-1, 112-2 is at a particular threshold value or within a range of the value. During the RFE idle/reconfiguration time slot 108, the radar device 110 can be in idle mode to conserve power, for example, or can perform a system reconfiguration.

In some cases, it is advantageous for the radar device 110 to minimize the duration of the BIST time slot 106 relative to the chirp sequence time slot 104. For example, any time that the transmitters spend in a testing phase takes away from the time that the transmitters can be transmitting radar signals that can be used to acquire radar measurement data. In other words, although the transmitters are operational and transmitting during the BIST time slot 106, the tests run during the BIST time slot 106 are not used to perform radar data acquisition. In some cases, the time during which the radar device 110 is not able to perform functions directly related to radar data acquisition is referred to as "blind time." Many radar systems are designed to minimize the duration spent in "blind time" since any increases in the "blind time" duration can impact the quality and relevance of radar data in fast-changing scenarios. For example, longer "blind times" can lead to the most recently acquired radar data becoming obsolete, thus negatively impacting applications relying on up-to-date data such as autonomous driving or driver assistance applications.

Each of the transmitters 112-1, 112-2 includes a respective phase shifter 114-1, 114-2, a respective gain (G) amplifier 116-1, 116-2, and a respective power amplifier (PA) 118-1, 118-2. Each of the transmitters 112-1, 112-2 is coupled with a respective output terminal 150, 160 which may correspond to one or more antenna components for transmitting signals from the radar device 110. Phase shifter 114-1 in transmitter 112-1 receives an input signal from a local oscillator (LO) 170 and converts the input signal to a complex (I/Q) radio frequency (RF) signal including a first signal component 172-1 (also referred to as a sine component) and a second signal component 172-2 (also referred to as a cosine component). The first signal component 172-1 is represented as sin(Φ₁(t)+Φ_{init_TX1}), where Φ₁(t) is the phase step at time t and Φ_{init_TX1} is the initial phase of the first transmitter 112-1. The second signal component 172-2 is represented as cos(Φ₁(t)+Φ_{init_TX1}), where Φ₁(t) is the phase step at time t and Φ_{init_TX1} is the initial phase of the first transmitter 112-1. In some embodiments, the phase shifter 114-1 receives a feedback signal from the BIST controller (BIST CTRL) 140. For example, in some embodiments, the feedback signal from the BIST controller 140 is transmitted via a direct digital synthesizer (not shown) that provides the feedback signal as an intermediate frequency (IF) signal to the phase shifter 114-1. This IF feedback signal fed back to the phase shifter 114-1 from the BIST controller 140 is used to program or calibrate the phase parameters of the phase shifter 114-1. Based on these input signals, the phase shifter 114-1 generates an output signal that is fed to the gain amplifier 116-1 and the power amplifier 118-1 prior to transmission from the first transmitter 112-1.

Similarly, the phase shifter 114-2 in transmitter 112-2 receives an input signal from the LO 170 and converts the input signal to a complex (I/Q) radio frequency (RF) signal including a first signal component 174-1 and a second signal component 174-2. The first signal component 174-1 is represented as sin(Φ₂(t)+Φ_{init_TX2}), where Φ₂(t) is the phase step at time t and Φ_{init_TX2} is the initial phase of the second transmitter 112-2. The second signal component 174-2 is represented as cos(Φ₂(t)+Φ_{init_TX2}), where Φ₂(t) is the phase step at time t and Φ_{init_TX2} is the initial phase of the second transmitter 112-2. In some embodiments, the phase shifter 114-2 receives a feedback signal from the BIST controller 140. For example, in some embodiments, the feedback signal from the BIST controller 140 is transmitted via a direct digital synthesizer (not shown) that provides the feedback signal as an IF signal to the phase shifter 114-2. This IF feedback signal fed back to the phase shifter 114-2 from the BIST controller 140 is used to program or calibrate the phase parameters of the phase shifter 114-2. Based on these input signals, the phase shifter 114-2 generates an output signal that is fed to the gain amplifier 116-2 and the power amplifier 118-2 prior to transmission from the second transmitter 112-2.

The mixer 132 in the TX BIST module 130 is connected to the outputs from both of the transmitters 112-1, 112-2. The output of the mixer 132 is coupled to a variable gain amplifier (VGA) 134, which in turn is connected to a low-pass filter (LPF) 136. An ADC 142 connected to the output of the LPF 136 and converts the mixed analog signals to a digital signal and outputs the digitized signal to the BIST controller 140. In some embodiments, the BIST controller 140 is any digital signal processing device, such as a microcontroller or a digital processor, programmed to perform the operations described herein.

The two transmitters 112-1, 112-2 each provide respective output signals with phase shifts (or phase rotations). In some cases, the output of each of the transmitters 112-1, 112-2 is influenced by one or more factors that can lead to phase errors in the transmitter output. In some embodiments, the one or more factors that can lead to phase error in the phase shifters of the transmitters include phase shifter gain imbalance, phase shifter phase imbalance, and phase shifter LO-to-RF leakage. In order to calibrate the phase shifters 114-1, 114-2 to reduce these influences, the BIST controller 140 of the radar device 110 performs calibrations based on the transmitter outputs. Based on the calibrations performed by the BIST controller 140, the BIST controller 140 feeds back signals to the phase shifters 114-1, 114-2 in the respective transmitters 112-1, 112-2. The signals fed back to the phase shifters include compensation values to adjust or modify the inputs to the phase shifters 114-1, 114-2 to compensate for any detected phase difference or phase step imbalances.

In some embodiments, the BIST controller 140 performs tests to ensure that the phase shifters 114-1, 114-2 of the two transmitters 112-1, 112-2 are operating within a tolerable error margin of one another to ensure the accuracy of the signals being transmitted from the radar device 110. For example, these tests include measuring the phase difference between the two phase shifters 114-1, 114-2 of the two transmitters 112-1, 112-2 to confirm that the phase difference is within a defined range. As another example, these tests include measuring the phase step of each of the two phase shifters 114-1, 114-2 of the two transmitters 112-1, 112-2 to confirm that the phase step taken by each phase shifter is accurate. According to some embodiments, the BIST controller 140 performs the phase difference measurements for the multiple transmitters 112-1, 112-2 and the phase step measurements for one of the transmitters in a single set of measurements by leveraging the mixer132 embedded between the transmitters 112-1, 112-2 in the radar device 110.

In some embodiments, the BIST controller 140 sets a phase of a phase shifter 114-1 of a first transmitter 112-1 to a fixed phase value and sets a phase of a phase shifter 114-2 of a second transmitter 112-2 to an initial phase value. The BIST controller 140 incrementally increases the second phase of the phase shifter 114-2 of the second transmitter 112-2 from the initial phase value to a final phase value and performs a sample measurement at each incremental increase with respect to the fixed phase value of the phase shifter 114-1 of the first transmitter 112-1 to obtain a plurality of IF samples. In some embodiments, the plurality of IF samples are provided as a discrete sine wave at the mixer 132 output. In some embodiments, the BIST controller 140 applies a Hilbert transform to the IF samples to transform them into complex samples, then identifies the phase of each sample by applying an arc tangent (Atan) function. The BIST controller 140 then computes the relative difference between the sample's phases to obtain the phase steps for the phase shifter 114-2 second transmitter 112-2as well as identifying the phase difference between the phase shifters 114-1, 114-2 of the two transmitters 112-1, 112-2. Accordingly, the phase difference between the two transmitters 112-1, 112-2 and the phase steps of the second transmitter 112-2 are derived from the same set of measurements. This reduces the total time needed to perform the BIST measurements. As a result, the duration of the BIST time slot 106 is reduced, thus reducing the "blind time" of the radar system compared to conventional techniques.

FIG. 2 illustrates a diagram depicting the process flow through the BIST circuitry components 200 in accordance with some embodiments. In some embodiments, the BIST circuitry components 200 depicted in FIG. 2 correspond to those depicted in the radar device 100 in FIG. 1 and include components in the TX BIST module 130 and the BIST controller 140 as well as the ADC 142. The following explanation of the process flow describes the phase step measurement being applied to the second transmitter 112-2, but a similar process flow is also applied to the first transmitter 112-1 to identify the phase step measurement for the first transmitter 112-1.

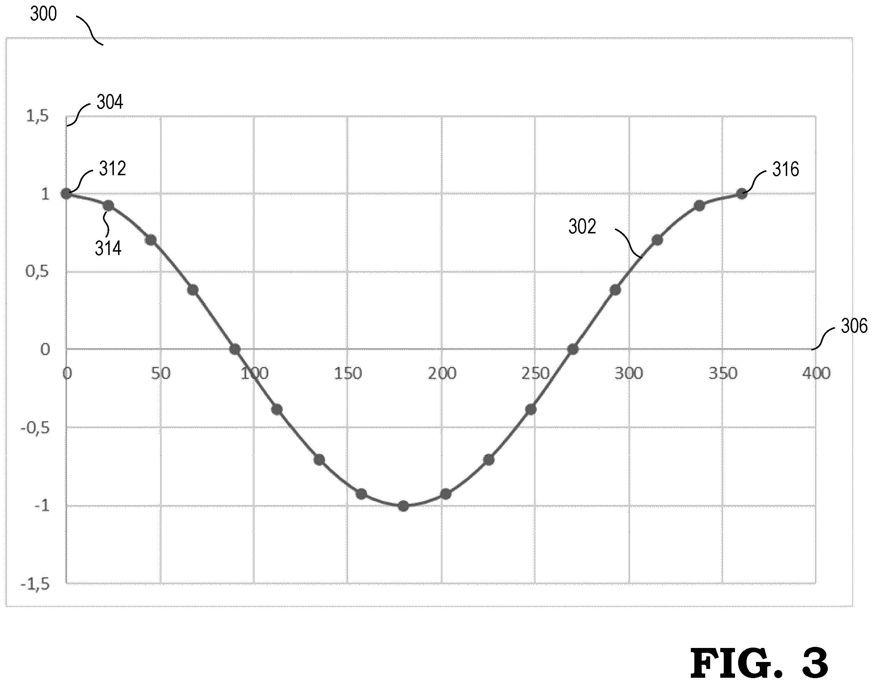

Signal 202 corresponds to the output of the first transmitter 112-1 and has a fixed phase. That is, the phase of the phase shifter 114-1 of the first transmitter 112-1 is set to a fixed phase value. Signal 204 corresponds to the output of the second transmitter 112-2 and is initially set to an initial phase value. For example, in some embodiments, the initial phase value is 0°. The phase of the phase shifter 114-2 of the second transmitter 112-2 is incrementally swept over a phase range with a certain phase step, Δθ, between each increment. For example, the phase of the second transmitter 112-2 is varied from the initial phase value of 0° to 360°. In some embodiments, this includes incrementing the phase of the second transmitter 112-2 from 0° to 360° based on a fixed phase step ranging from 1° to 90°. For example, if the fixed phase step is 90°, the phase of the second transmitter 112-2 is incremented from 0° to 90° to 180° to 270° to 360°. Accordingly, the phase of the first transmitter 112-1 is fixed to provide a fixed phase value in signal 202 and the phase of the second transmitter 112-2 is swept over a phase range with a fixed phase step to provide a range of different phase values in signal 204. For each different phase in signal 204, the BIST circuitry 200 captures a sample at the mixer 132 output 206 to create an IF waveform of real samples. An example of samples captured at the mixer 132 output 206 is illustrated in FIG. 3.

FIG. 3 shows an example of a graph 300 with a line 302 representing a plurality of samples captured at the output of a mixer, such as at the output of mixer 132 in FIGs. 1 and 2. In graph 300, the x-axis 306 is in degrees and the y-axis 304 represents the value of the measured samples. In some embodiments, the value of the measured samples is indicative of the measured phase difference between the two transmitters.

In this example, the phase of a first transmitter (such as transmitter 112-1) is fixed at 0 degrees and the phase of a second transmitter (such as transmitter 112-2) is varied from 0 degrees in the first sample 312 to 360 degrees in the last sample 316 with 22.5 degree increments therebetween. For example, after capturing the first sample 312 when the phase of the first transmitter and phase of the second transmitter are both set to 0 degrees, the phase of the second transmitter is increased to 22.5 degrees. The second sample 314 is then captured when the phase of the first transmitter is at 0 degrees and the phase of the second transmitter is at 22.5 degrees. This process of increasing the phase of the second transmitter by 22.5 degrees (while keeping the phase of the first transmitter fixed at 0 degrees) and taking measurements at each increment continues until the whole range (in this case, 360 degrees) is covered. In this manner, the mixer provides an IF waveform of samples at its output.

Referring back to FIG. 2, the output 206 of the mixer 132 is sent to a VGA 134. The output 208 of the VGA 134 is input to a LPF 136. The output 210 of the LPF is input to ADC 142 to digitize the signal of samples. The output 212 of the ADC 142 includes a plurality of real samples that are sent to the BIST controller 140. The output 212 of the ADC 142 is input to a Hilbert transform block 242 at a first stage in the BIST controller 140. The Hilbert transform block 242 transforms the plurality of real samples in the signal output 212 from the ADC 142 into a plurality of complex samples and outputs these complex samples in output 214. The complex samples in the output 214 of the Hilbert transform block 242 is input to an Atan block 244, which perform an Atan function on the input complex sample to generates a phase of each sample (e.g., θ₁, θ₂, θ₃, ..., θ_{N}, where N is the number of samples taken). The output 216 of the Atan block 224 is then input to the differential block 246 which computes the relative difference between the sample's phases (Δθ/dn)to identify the phase steps of the second transmitters 112-2 in output 218. Thus, the BIST controller 140 is able to measure both the phase difference between the phase shifter 114-1 of the first transmitter 112-1 and the phase shifter 114-2 of the second transmitter 112-2 as well as identify the phase steps of the phase shifter 114-2 of the second transmitter 112-2 in the same set of measurements.

Any of the various elements of FIG. 2, including the components of the BIST controller 140 (e.g., the Hilbert transform block 242, the Atan block 244, the differential block 246) are, in various implementations, implemented as one of software executing on a processor, hardware that is hard-wired (e.g., circuitry) to perform the various operations described herein, or a combination thereof.

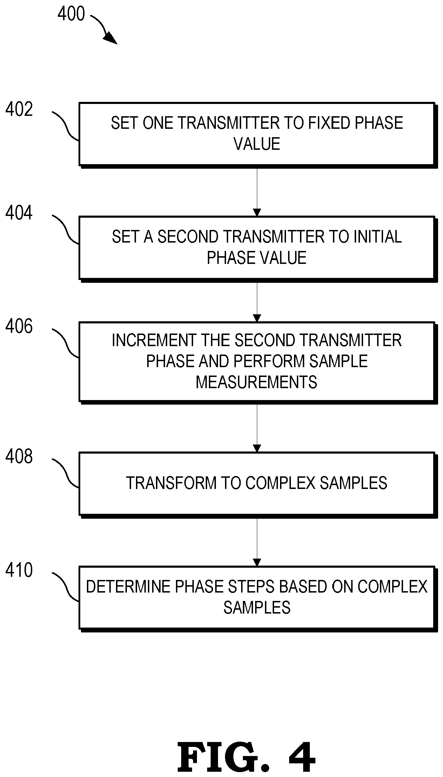

FIG. 4 shows a flowchart 400 describing a method to perform phase difference measurements between two transmitters and phase step measurements of one of the two transmitters in accordance with some embodiments. In some embodiments, the BIST controller 140 performs the method described in flowchart 400 in conjunction with other components (e.g., with the TX BIST module 130 and the two transmitters 112-1, 112-2) of a multi-transmitter radar device such as radar device 100.

At 402, the method includes the BIST controller 140 setting one transmitter (e.g., first transmitter 112-1) to a fixed phase value. In some embodiments, this includes setting the phase of the phase shifter 114-1 in the first transmitter 112-1 to a fixed value. For example, the fixed phase value is any phase value ranging from 0° to 360°.

At 404, the method includes the BIST controller 140 setting a second transmitter (e.g., second transmitter 112-2) to an initial phase value. In some embodiments, this includes setting the phase of the phase shifter 114-2 in the second transmitter 112-2 to an initial phase value ranging from 0° to 360°.

At 406, the method includes incrementing the phase of the second transmitter and performing sample measurements relative to the fixed value of the first transmitter at each increment. In some embodiments, this includes the BIST controller 140 incrementing (or in other embodiments, decrementing) the phase of the phase shifter 114-2 in the second transmitter 112-2 by a phase step, Δθ, and performing measurements relative to the fixed phase value of the first transmitter 112-1 at each increment (e.g., via mixer 132) to produce an IF-like waveform of the measured samples. In some embodiments, the IF-like waveform of the measured samples is fed to an ADC such as ADC 142 to produce a digital signal of the measured samples.

At 408, the method includes the BIST controller 140 transforming the digitized samples to complex samples. In some embodiments, this includes applying a Hilbert transform (e.g., via Hilbert transform block 242) to the digital signal of the measured samples output from the ADC 142. After transforming the digitized samples to complex samples, the BIST controller 140 applies an arctan (Atan) function to the complex samples (e.g., via Atan block 244) to generate a signal including the measured phases of the samples. In some embodiments, the measured phases indicate the phase difference between the first transmitter 112-1 and the second transmitter 112-2.

At 410, the BIST controller 140 determines the phase steps of the second transmitter based on the complex samples. In some embodiments, this includes differential block 246 in the BIST controller 140 identifying the phase steps of the second transmitter based on computing relative differences between the sample phases that are output from the Atan block 244.

In some embodiments, the phase of the second transmitter 112-2 is fixed and the phase of the first transmitter 112-1 is varied to measure the phase steps of the first transmitter 112-1 instead of the second transmitter 112-2.

Thus, by performing the method illustrated in flowchart 400, the BIST controller is able to identify the phase difference between two transmitters (e.g., transmitter 112-1 and transmitter 112-2) and the phase step of one of the two transmitters (e.g., transmitter 112-2) from the same set of measurements. This reduces the global measurement time need to perform the BIST measurements in the BIST time slot (e.g., BIST time slot 106), therefore allowing the radar system to save up to 85% of the transmission phase step measurement time compared to conventional techniques.

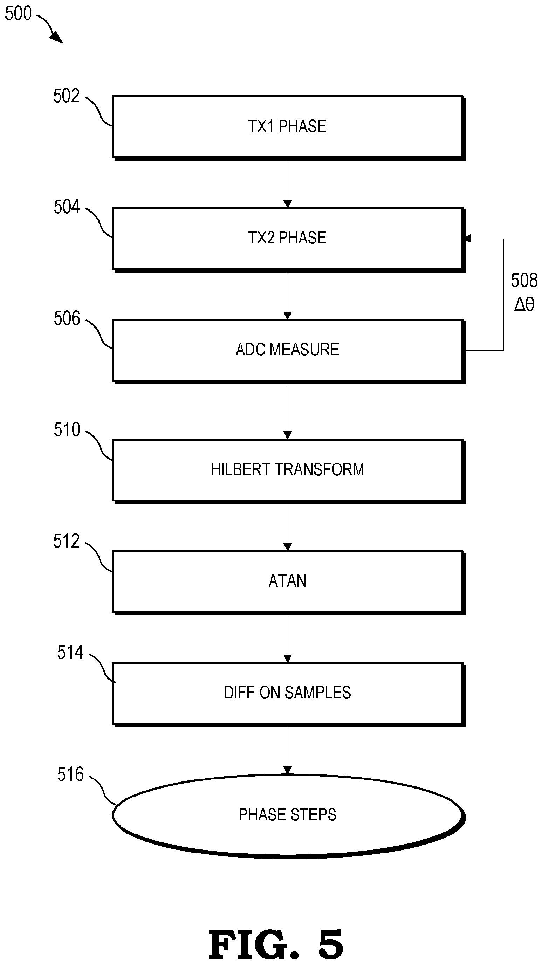

FIG. 5 shows a flowchart 500 describing a method to perform phase difference measurements between two transmitters and phase step measurements of one of the two transmitters in accordance with some embodiments. In some embodiments, the BIST controller 140 performs the method described in flowchart 500 in conjunction with other components (e.g., with the TX BIST module 130 and the two transmitters 112-1, 112-2) of a multi-transmitter radar device such as radar device 100.

At 502, the method includes the BIST controller 140 setting a first transmitter TX1 (e.g., such as either one of transmitters 112-1 or 112-2) to a fixed phase value. In some embodiments, this includes setting the phase of either one of phase shifter 114-1 in the first transmitter 112-1 to a fixed value or phase shifter 114-2 in the second transmitter 112-2 to the fixed value. For example, the fixed phase value is any phase value ranging from 0° to 360°.

At 504, the method includes the BIST controller 140 setting a second transmitter TX2 (e.g., the other one of transmitters 112-1 or1 12-2) to an initial phase value. In some embodiments, this includes setting the phase of the other one of phase shifter 114-1 in the first transmitter 112-1 or phase shifter 114-2 in the second transmitter 112-2 to an initial phase value ranging from 0° to 360°.

At 506, an ADC (such as ADC 142) measures the phase difference of the two transmitters TX1 and TX2. For example, a mixer (such as mixer 132) receives the output from both transmitters TX1 and TX2 and generates an output that is input to the ADC (e.g., via other components such as a VGA). The BIST controller 140 stores the measured phase difference as a sample then increments the phase of the second transmitter TX2 504 by a phase step (Δθ) at loop 508 and repeats the ADC measurement at 506. The BIST controller 140 continues this process of incrementing the phase of the second transmitter TX2 until reaching a final phase value of the second transmitter TX2. For example, in one embodiment, this includes performing an ADC measurement 506 by adjusting the phase value of the second transmitter TX2 in the following increments: 0°, 45°, 90°, 135°, 180°, 225°, 270°, 315°, and 360.° As such, the phase step (Δθ) in this example is 45°. In other embodiments, the phase step (Δθ) can be any other value ranging from 2° to 60°. Once the entire phase range is covered (e.g., 0° to 360°) and an IF-like waveform of the sample measurements is generated, the method proceeds to block 510.

At 510, the BIST controller 140 applies a Hilbert transform (e.g., via Hilbert transform block 242) to the IF-like sample measurements to obtain a frequency domain spectrum. By applying a Hilbert transform, the BIST controller 140 forces a negative part (e.g., corresponding to the samples with the negative values shown in FIG. 3) of the spectrum to zero. Additionally, the Hilbert transform applies an inverse Fourier transform to obtain complex samples of the initial IF sinewave.

At 512, the BIST controller 140 applies an Atan function (e.g., via Atan block 244) to identify the phase of each sample. Then, at 514, the BIST controller computes the relative differences between the sample's phases to generate the phase steps at 516.

Accordingly, by implementing the method according to flowchart 500, the BIST controller 140 is able to identify the phase steps of TX2 in addition to measuring the phase difference between the two transmitters TX1 and TX. For example, conventional techniques require the additional steps of incrementing the phase step of the first transmitter TX1 to measure the phase step of the second transmitter TX2. This results in a significant increase in time for testing the same components tested in the methods described in flowcharts 400 and 500. For example, for a safety test of 8 steps (i.e., phase step of 45°), the amount of time to measure the phase difference between two transmitters and the phase step of one of the transmitters is in the range of about 16 µs according to the embodiments described herein. The amount of time to measure these same parameters according to conventional techniques is in the range of about 128 µs. In this manner, for a step size of 45°, the techniques of this disclosure reduce the testing time by a factor of approximately 6-8.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:
setting a first phase of a first transmitter in a multi-transmitter device to a fixed phase value and setting a second phase of a second transmitter in the multi-transmitter device to an initial phase value;
varying the second phase of the second transmitter from the initial phase value to a final phase value and performing a sample measurement at each variation to obtain a plurality of intermediate frequency (IF) samples; and
transforming the plurality of IF samples into complex samples and determining one or more phase steps of the second transmitter based on the complex samples.

2. The method of claim 1, further comprising performing the sample measurement at each variation relative to the first phase.

3. The method of claim 2, wherein performing the sample measurement relative to the first phase at each variation to obtain the plurality of IF samples comprises mixing a signal from the first transmitter with a signal from the second transmitter and performing an analog-to-digital conversion to obtain the plurality of IF samples.

4. The method of any of claims 1 to 3, further comprising determining a phase difference between the first transmitter and the second transmitter based on the complex samples.

5. The method of any of claims 1 to 4, wherein transforming the plurality of IF samples into complex samples comprises applying a Hilbert transform to the plurality of IF samples.

6. The method of claim 5, wherein determining the one or more phase steps of the second transmitter comprises computing an inverse tangent of a resulting product of the Hilbert transform to identify a phase corresponding to each of the plurality of IF samples.

7. The method of claim 6, wherein determining the one or more phase steps of the second transmitter comprises computing a relative difference between each of the identified phases corresponding to each of the plurality of IF samples.

8. The method of claim 7, wherein the relative difference is based on a number of performed sample measurements.

9. A device comprising:
a first transmitter comprising a first phase rotator;
a second transmitter comprising a second phase rotator;
a mixer to combine outputs from the first transmitter and the second transmitter; and
a processor to:
set a first phase of the first transmitter to a fixed phase value and set a second phase of the second transmitter to an initial phase value;
vary the second phase of the second transmitter from the initial phase value to a final phase value and perform a sample measurement at each variation to obtain a plurality of intermediate frequency (IF) samples; and
transform the plurality of IF samples into complex samples and determine one or more phase steps of the second transmitter based on the complex samples.

10. The device of claim 9, the processor to perform the sample measurement at each variation relative to the first phase.

11. The device of any of claims 9 to 10, the processor to determine a phase difference between the first transmitter and the second transmitter based on the complex samples.

12. The device of claim 9, wherein transforming the plurality of IF samples into complex samples comprises applying a Hilbert transform to the plurality of IF samples.

13. The device of claim 12, wherein determining the one or more phase steps of the second transmitter comprises computing an inverse tangent of a resulting product of the Hilbert transform to identify a phase corresponding to each of the plurality of IF samples.

14. The device of claim 13, wherein determining the one or more phase steps of the second transmitter comprises computing a relative difference between each of the identified phases corresponding to each of the plurality of IF samples.

15. A built-in-safety test (BIST) circuitry for a multi-transmitter device, the BIST circuitry to:
set a first phase of a first transmitter in the multi-transmitter device to a fixed phase value and set a second phase of a second transmitter in the multi-transmitter device to an initial phase value;
vary the second phase of the second transmitter from the initial phase value to a final phase value in increments and perform a sample measurement at each increment to obtain a plurality of intermediate frequency (IF) samples; and transform the plurality of IF samples into complex samples and determine one or more phase steps of the second transmitter based on the complex samples.
